# EUROPEAN PATENT APPLICATION

(11) **EP 1 971 078 A1**
(43) Date of publication of application: **17.09.2008**
(21) Application number: 07005411.9
(22) Date of filing: 15.03.2007
(51) Int. Cl.: H04L 12/28

(54) **Method and arrangement for the composition of a first and a second communication access network**

(71) Applicant: Nokia Siemens Networks GmbH & Co. KG, 81541 München (DE)
(72) Inventor: Pollak, Christoph, Dr., 1190 Wien (AT)

(57) **Abstract**

The invention describes a method and an associated arrangement for the registration of a first communication access network N1 with at least one second communication access network N2, with the first communication access network N1 comprising at least one first access node AR, and with the first communication access network N1 authenticating itself to the second communication access network N2 during registration prior to a composition of the first with the second communication access network N1, N2, and at least one service parameter LFP1, LFP2, ...LFP3 of the first communication access network N1 being negotiated between the first access node AR and a composition functional entity of the second communication access node N2.

## Description

The invention relates to a method specified in the preamble of claim 1 and an arrangement for the composition of a first and a second communication access network as specified in the preamble of claim 4.

If the coverage of a Public Land Mobile Network, e.g. UMTS, is enhanced by alternative, e.g. short range access networks, for example WLAN and both networks do not have the same Quality-of-Service QoS scheme a QoS class mapping must be defined between the two access networks. In order to attach the short range access network to the Public Land Mobile Network this mapping must be achieved automatically during the negotiation of a so called Composition Agreement.

Currently, standards like 3GPP 23207-660_E2E_QoS_Concept and 23107-630_QoS_Concept_and_Architecture define a QoS scheme for extending the 3GPP QoS to the internet via parameters defined for e.g. DiffServ or IntServ. The alternative short range access network is able to map these parameters to standards like IEEE 802.1d or 802.11e QoS mechanisms. However, this does not assure that during a handover to and from such an alternative short range access network sessions would be maintained or to influence a handover decision of mobile subscribers in a way that avoids handovers that would lead to session degradation. Moreover, a Public Land Mobile Network which should accept such an alternative short range access network might want to know about the QoS capabilities of the alternative access network.

If the coverage of the Public Land Mobile Network is dynamically enhanced by the alternative short range access network and one of the two networks supports only a sub set of mobility handover procedures of the other the procedure to be applied for handover must be defined before the networks are connected. Handover procedures may differ with respect to pre-authentication, forwarding tunnels, procedure and content of context transfer mobility protocol etc.

Currently, the mobility mechanism to be used between two networks must be fixed prior to connecting the related networks.

The object of the invention is to specify a simplified method as well as an associated arrangement for the composition of two communication access networks.

In accordance with the invention, the proposed object is achieved with the arrangement and the method of the type mentioned at the start by means of the features detailed in the independent claims.

The subject matter of the invention is advantageous in that a composition of different communication access networks is possible in a simple manner.

The subject matter of the invention is further advantageous in that service parameters, which describe the attributes of the communication access networks, are negotiated between two communication access networks and are not rigidly stipulated in advance.

A further advantage consists in that a first communication access network can easily authenticate itself to a second communication access network by means of a SIM card.

Further advantageous embodiments are specified in the subclaims.

Further particularities of the invention are apparent from the subsequent descriptions of two exemplary embodiments with reference to the drawings, in which;
- Fig. 1:: shows an architecture of a first and a second communication access network,
- Fig. 2:: shows a flow diagram,
- Fig. 3: shows a further architecture of a first and a second communication access network and
- Fig. 4: shows a further flow diagram.

The invention describes a method and an associated arrangement for the registration of a first communication access network N1 with at least one second communication access network N2, with the first communication access network N1 comprising at least one first access node AR, and with the first communication access network N1 authenticating itself to the second communication access network N2 during the registration prior to a composition of the first with the second communication access network N1, N2, and at least one service parameter LFP1, LFP2,...LFP3 of the first communication access network N1 being negotiated between the first access node AR and a composition functional entity CFE of the second communication access network N2.

The service parameters LFP1, LFP2,... LFP3 describe inter alia Quality of Service attributes and/or Mobility Management attributes of the first communication access network N1.

The first communication access network can authenticate itself to the second communication access network N2 in a first access node by means of a Smart Card, in particular a SIM card.

The first communication access network N1 can be a Wireless Access Network WLAN and the second communication access network N2 can be a GSM-GPRS network or a UMTS network.

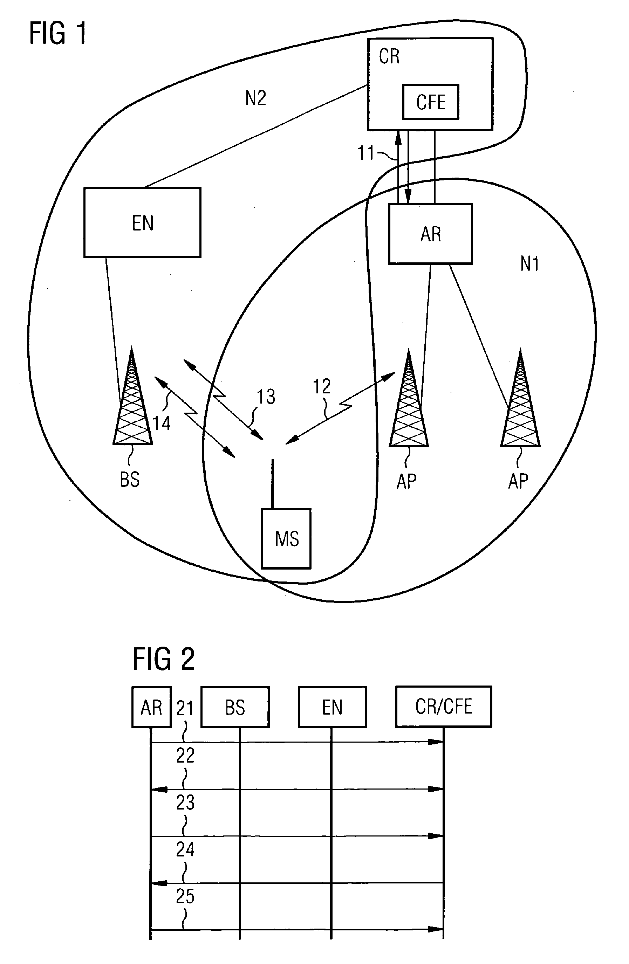

Fig. 1 shows an architecture of a first and a second communication access network N1, N2. The first commmunication access network N1 is a WLAN for instance, the second communication network N2 is a GSM GPRS network. A mobile subscriber MS can contact both radio networks N1, N2 by way of its multimodal radio interface. This is carried out in the first communication access network N1 by way of access points AP to a first access node AR, a so-called Access Router. In the second communication access network N2, the composition is carried out by way of a base station BS and a second access node ED, also known as an edge node, for example a Serving GPRS Support Node SGSN, to the GSM core network CR, which contains inter alia a Home Location Register, a Network Context Server and a Home Subscriber Server. The composition functional entity CFE according to the invention is also an integral component of the GSM core network CR.

When the first access node AR is connected to the second communication access network N2, it firstly starts a composition request initiation 21 and authenticates 22 itself which is schematically shown in the flow diagram of fig. 2. Subsequently it will try to establish a business relation with the second communication access network N2 in order to be able to serve as coverage extension and for being compensated for it. The term "composition" is used by communications experts to describe this procedure which is schematically shown in the flow diagram of fig. 2. During the composition procedure 11, 23 the first access node AR will among other things deliver following service parameters LFP1, LFP2, ...LFPn to the composition functional entity CFE of the second communication access network N2:
- The used Quality-of-Service QoS scheme within the first communication access network N1 including whether or not a overall load control is provided that would guarantee the QoS provision. In case of DiffServ or IEEE 802.11e based mechanisms that includes the actually supported QoS classes of the respective QoS scheme.
- The ability to send load information to a network context server of the second communication access network N2. That includes the frequency of such load updates, e.g. periodically, event based etc., as well as the format of such information, e.g. only overall numbers, separated for each QoS class, only percentage of totally available bandwidth, absolute residual bandwidth for each/all QoS classes.
The composition functional entity CFE of the second communication access network N2 checks whether or not a network context server is available and if and how the QoS scheme of the first communication access network N1 can be mapped with the QoS scheme of the second communication access network N2. There may be other functional entities that have to support the composition functional entity CFE for this action, e.g. a QoS functional entity or a management functional entity, or a context information base. After having processed all these items, the second communication access network N2 returns a composition response 24 to the composition request 23 that may accept the proposal of the first access node AR, reject it or modify it. After that the first access node AR sends an acknowledgement 25.

If a terminal of the mobile subscriber MS or a mobile device which is connected to the second communication access network N2 according to fig. 1 comes into the range of the first access node AR of the first communication access network it will receive the beacon frames 12 of the access point AP. It now has to take a handover decision. Based on the information available in the beacons the terminal of the mobile subscriber MS is in general not able to know whether or not the session will "survive" the handover or not. The terminal of the mobile subscriber MS will send a measurement report or a handover request or a "Request for a handover recommendation" 13 to the second communication access network N2. This request 13 will be received by a policy server of the core network CR. The policy server takes all available information into account especially the degree of QoS support and the load situation in the first communication access network N1. Then the core network CR sends a handover decision or handover recommendation response 14 to the terminal of the mobile subscriber MS which in turn performs or does not perform a handover into the first communication access network N1. For the reverse direction of a handover, the procedure is to be executed in reverse manner: detection of the second communication access network N2 via e.g. broadcast channel, then handover decision request to policy server via the first communication access network N1, then reception of handover decision response via the first communication access network N1 and then handover execution by the terminal of the mobile subscriber MS.

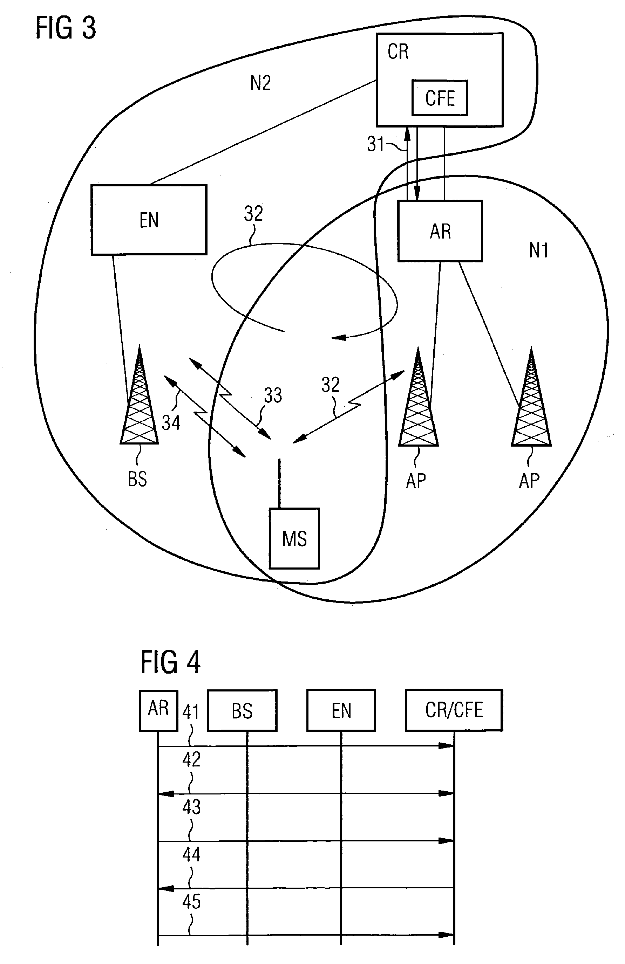

Fig. 3 shows an architecture of a further first and second communication access network N1, N2. The first communication access network N1 is a WLAN for instance, the second communication network N2 is a GSM-GPRS network. A mobile subscriber MS can contact both radio networks N1, N2 by way of its multimodal radio interface. This is carried out in the first communication access network N1 by way of access points AP to a first access node AR, a so-called Access Router. In the second communication access network N2, the composition is carried out by way of a base station BS and a second access node EN, also known as an edge node, for example a Serving GPRS Support Node SGSN, to the GSM core network CR, which contains inter alia a Home Location Register, a Network Context Server and a Home Subscriber Server. The composition functional entity according to the invention is also an integral part of the GSM core network CR.

When the first access node AR is connected to the second communication access network N2, it firstly starts a composition request initiation 41 and authenticates 42 itself which is schematically shown in the flow diagram of fig. 4. Subsequently it will try to establish a business relation with the second communication access network N2 in order to be able to serve as coverage extension and for being compensated for it. The term "composition" is used by communications experts to describe this procedure which is schematically shown in the flow diagram of fig. 4. During the composition procedure 31, 43, 44 the first access node AR will among other things deliver the following service parameters LFP1, LFP2, ...LFPn to the composition functional entity CFE of the second communication access network N2:
- The mobility management mechanisms and handover procedures supported by the first communication access network N1 including support for pre-authentication procedures i.e. to authenticate the terminal of the mobile subscriber MS for the second communication access network N2 via the first communication access network N1 prior to the handover execution and vice versa,
- the Mobility protocol, e.g. MIP, HIP, FMIP, netLMM,
- the support of forwarding tunnels during the handover execution including the transport format of this tunnel which may include the definition of the forwarding tunnel endpoints,
- the support of buffering or bicasting etc.

The composition functional entity CFE of the second communication access network N2 checks whether or not it is able to cooperate with at least one of the above proposed mechanisms of the first communication access network N1. If more than one are technically possible, the selection of the mechanism to use may be influenced by the intended compensation scheme. After having processed all these items, the second communication access network N2 returns a composition response 44 to the composition request 43 that may accept the proposal of the first access node AR, reject it or modify it. After that the first access node AR may send an acknowledgement 45.

If a terminal of the mobile subscriber MS or a mobile device of the second communication access network N2 according fig. 3 comes into the range of the first access node AR of the first communication access network N1 it will receive the beacon frames 32 of the access point AP. The terminal of the mobile subscriber MS has to take a handover decision. This decision can also be taken by the second communication access network N2 by performing handover request 33 and a handover decision 34. The subsequent handover will then be executed according to the mechanisms agreed during the composition. The information on the agreed handover mechanism must be encoded on the beacon frames 35 of the first communication access network N1 or it may be returned in the handover decision response. In this case the need for the handover decision request must be encoded in the beacon frames in order to allow the terminal of the mobile subscriber MS to behave appropriately.

## Claims

1. A method for the registration of a first communication access network (N1) with at least one second communication access network (N2), with the first communication access network (N1) comprising at least one first access node (AR),
**characterized in that**
with the registration prior to a composition of the first communication access network (N1) with the second communication access network (N2), the first communication access network (N1) authenticates itself to the second communication access network (N2), and at least one service parameter (LFP1, LFP2, ...LFP3) for the first communication access network (N1) is negotiated between the first access node (AR) and a composition functional entity (CFE) of the second communication access network (N2).

2. The method as claimed in claim 1,
**characterized in that**,
the service parameters (LFP1, LFP2,... LFP3) describe Quality of Service attributes and/or Mobility Management attributes to be used by the first communication access network (N1).

3. The method as claimed in claim 1 or 2,
**characterized in that**
the first communication access network (N1) is authenticated in the first access node by means of a Smart Card, in particular an SIM card.

4. An arrangement for the registration of a first communication access network (N1) with at least one second communication access network (N2), with the first communication access network (N1) comprising at least one first access node (AR),
**characterized in that**
a composition functional entity (CFE) is arranged in the second communication access network (N2), that with the registration prior to a composition of the first with the second communication access network (N1, N2), the first communication access network (N1) authenticates itself to the second communication access network (N2), and the first access node (AR) with the composition functional entity (CFE) negotiates at least one service parameter (LFP1, LFP2,... LFP3) for the first communication access network (N1).

5. The arrangement as claimed in claim 4,
**characterized in that**
a Smart Card is provided in the first access node, in particular an SIM card, and that the first communication access network (N1) authenticates itself by means of the Smart Card.

6. The arrangement as claimed in claim 4 or 5,
**characterized in that**
the first communication access network (N1) is a Wireless Access Network WLAN, and that the second communication access network (N2) is a GSM-GPRS network or a UMTS network.
